(19) Europäisches Patentamt
European Patent Office
Office européen des brevets

(11) EP 1 681 674 B1

(12) **EUROPEAN PATENT SPECIFICATION**

(45) Date of publication and mention of the grant of the patent:
**09.03.2011 Bulletin 2011/10**

(51) Int Cl.:
***G11B 7/254*** *(2006.01)*

(21) Application number: **05112006.1**

(22) Date of filing: **13.12.2005**

# (54) Protective film for optical disks and optical disk using the same

Schutzfilm für und ihn enthaltende optische Scheibe

Film de protection pour disques optiques et disque optique l'utilisant

(84) Designated Contracting States:
**AT DE FR GB NL**

(30) Priority: **07.01.2005 JP 2005002585**

(43) Date of publication of application:
**19.07.2006 Bulletin 2006/29**

(73) Proprietor: **Lintec Corporation**
**Tokyo (JP)**

(72) Inventors:
- **Miyata, Sou**
**Chiba (JP)**
- **Nakabayashi, Masahito**
**Saitama (JP)**
- **Kubota, Shin**
**3-24-36-403, Hiyoshihon-cho**
**Kanagawa (JP)**
- **Sekiya, Masahiko**
**Chiba (JP)**

(74) Representative: **Gille Hrabal Struck Neidlein Prop Roos**
**Patentanwälte**
**Brucknerstrasse 20**
**40593 Düsseldorf (DE)**

(56) References cited:
**EP-A- 1 047 055**
**EP-A- 1 327 978**
**JP-A- 2000 067 468**
**JP-A- 2001 040 246**

EP 1 681 674 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### BACKGROUND OF THE INVENTION

1. Field of the Invention

The present invention relates to a protective film for optical disks and an optical disk using the same. More particularly, the present invention pertains to a protective film for optical disks, which is used for the purpose of protecting information recording layers of optical disks, particularly Blu ray Discs (BD), and never exerts adverse influence upon the recording characteristics of the optical disks, in which the corrosion of metallic reflection films and information recording layers each for optical disks is suppressed; and to an optical disk in which the above - mentioned protective film is stuck on the information recording layer via a pressure sensitive adhesive layer.

2. Background Art

In recent years, there are already widely employed as an optical disk, information read only disks such as CD and CD—ROM, magneto-optical disks called MO or MD and recordable optical disks called CD - R. At the present time, the recording capacity of the above - mentioned optical disks is 650 MB (megabyte) approximately, but there are developed a series of optical disks called DVD (digital versatile disks) which have a larger recording capacity, specifically a series of DVD including DVD - ROM (read only DVD), DVD - R (recordable DVD), DVD - RAM (writing in / readout DVD), DVD - RW (rewritable DVD) and the like. Any of these DVD series is composed of two substrates that are stuck to each other, and is put into practical application as having a recording capacity of 4.7 GB (gigabyte) per one side with 9.4 GB per both sides. For the recording and reproduction of information, a red laser beam having a wavelength of about 630 to 650 nm is used.

However the DVD in the present state involves a problem that, for instance, in the case of high - definition television, it has an accommodating /recording capacity of only about 30 minutes. Thus in order to make the DVD widespread, it is desired that the DVD has an accommodating /recording capacity for high - definition image of at least 2 hours per one side. For this purpose, an optical disk having a large capacity is required, and to realize such a disk, recording and reproducing by means of laser beams having shorter wavelength become necessary.

Under such circumstances at the present time, an investigation is made on the use of blue laser beams having a wavelength of 405 nm approximately. However, the use of blue laser beams having such a short wavelength makes it possible to downsize track pitches and pit sizes, whereas problems are created in that the depth of focus is made shallow by the short wavelength, thus making it impossible to use the standards and methods that are applied at the present time, to the DVD series in which substrates each having a thickness of 0.6 mm (total thickness of the substrates being 1.2 mm) are stuck on each other. It being so, an attempt is made, for instance, to stick a light transmittable protective film which is composed of same raw material as the substrate and has a thickness of 0.1 mm onto an information recording layer formed on a substrate having a thickness of 1.1 mm. In this case, an investigation is made as the sticking method of the protective film, on the use of an energy beam — curable adhesive or a pressure sensitive adhesive, and it is essential in this case that the adhesive and tacky adhesive never bring about hindrance to the recording or reproduction function of the optical disk.

Among the above-mentioned methods, the sticking method by the use of the energy beam-curable adhesive causes a problem in that uneven thickness is liable to occur, since ordinary spin coating method is adopted as the coating of the forgoing adhesive. As opposed to the forgoing, the use of the pressure sensitive adhesive can realize a highly accurate thickness.

The protective film for optical disks is stuck to the side where the beam for carrying out the recording and reproduction of the optical disks is incident. An optical disk produced by the use of a conventional protective film using a pressure sensitive adhesive for optical disks gives rise to a large difference in refractive index between the substrate used for the protective film and the pressure sensitive adhesive layer (in general, the refractive index of the pressure sensitive adhesive layer is less than that of the substrate). Accordingly, at the time when a laser beam is incident and reflects from the recording surface, refraction and reflection of the laser beam are generated on the interface between the pressure sensitive adhesive layer and the substrate film, thereby lowering signal intensity or exerting evil influence as a noise on the signal level. In view of the foregoing, the difference in refractive index between the substrate film and the pressure sensitive adhesive layer is preferably as small as possible (for instance, refer to Japanese Patent Application Laid-Open No. 67468 /2000 (Heisei 12)).

EP-A-1 047 055 discloses a protective film for optical dishs comprising a light transmittable substrate film and a pressure sensitive adhesive layer.

However, since the pressure sensitive adhesive layer has generally a low refractive index as compared with the substrate film, it is taken into consideration to mix a component having a high refractive index in the pressure sensitive

adhesive which constitutes the pressure sensitive adhesive layer for the purpose of lessening the difference in refractive index between the substrate film and the pressure sensitive adhesive layer. Nevertheless, the pressure sensitive adhesive mixed with a component having a high refractive index gives rise to a fear of corroding a metallic reflection film or an information recording layer each constituting an adherend in an environment of a high temperature and high humidity by reason of the bleeding of the component having a high refractive index.

## SUMMARY OF THE INVENTION

Under such circumstances, it is an object of the present invention to provide a protective film for optical disks, which is used for the purpose of protecting the information recording layer of optical disks, particularly Blu-ray Discs (BD), and never exerts adverse influence upon the recording characteristics of the optical disks, in which the corrosion of metallic reflection films and information recording layers each for optical disks is suppressed, and at the same time provide an optical disk in which the above-mentioned protective film is stuck on the information recording layer via a pressure sensitive adhesive layer.

Other objects of the present invention will become obvious from the text of the specification hereinafter disclosed.

In order to achieve the above mentioned objects, intensive extensive research and investigation were accumulated by the present inventors. As a result, it has been discovered that the objects can be achieved by a protective film for optical disks which is equipped on one side of a light transmittable substrate film with a pressure sensitive adhesive layer that has a difference in refractive index from the above-mentioned substrate film being at most a given value and also has a gel fraction being at least a given value, preferably a pressure sensitive adhesive layer composed of a pressure sensitive adhesive containing as a resinous component, a (meth)acrylic acid ester copolymer having a constitutional unit derived from (meth)acrylic acid ester bearing aryloxyalkyl group and / or arylalkyl group. The present invention has been accomplished by the foregoing findings and information. That is to say, the present invention provides the following.

1. A protective film for optical disks which comprises a light transmittable substrate film and a pressure sensitive adhesive layer formed on one side thereof, wherein the difference in refractive index between the light transmittable substrate film and the pressure sensitive adhesive layer is at most 0.08 and a gel fraction of the pressure sensitive adhesive layer is at least 65% by mass.
2. The protective film for optical disks as set forth in the preceding item 1, wherein the pressure sensitive adhesive which constitutes the pressure sensitive adhesive layer is composed of a (meth)acrylic acid ester copolymer as a resinous component.
3. The protective film for optical disks as set forth in the preceding item 2, wherein the (meth)acrylic acid ester copolymer has a constitutional unit originating from (meth)acrylic acid ester bearing aryloxyalkyl group and / or arylalkyl group.
4. The protective film for optical disks as set forth in the preceding item 2 or 3, wherein the (meth)acrylic acid ester copolymer has a weight average molecular weight in the range of 500,000 to 2,000, 000.
5. The protective film for optical disks as set forth in any of the preceding items 2 to 4, wherein the proportion of the component having a molecular weight of at most 10,000 in non - crosslinkd components in the (meth)acrylic acid ester copolymer is at most 30% by mass.
6. The protective film for optical disks as set forth in any of the preceding items 1 to 5, wherein the light transmittable substrate film is a polycarbonate based resin film.
7. The protective film for optical disks as set forth in any of the preceding items 1 to 6, which has a light transmittance at a wavelength of 405 nm of at least 87%.
8. An optical disk comprising the protective film for optical disks which is set forth in any of the preceding items 1 to 7, and which is stuck onto an information recording layer formed on at least one side of a substrate for the optical disk via a pressure sensitive adhesive layer.

## DESCRIPTION OF THE PREFERRED EMBODIMENTS

The protective film for optical disks according to the present invention is intended for protecting the information recording layer, and is constituted of a light transmittable substrate film and a pressure sensitive adhesive layer formed on one side thereof. In the present invention, a light transmittable substrate is used as the above-mentioned substrate film. The term "light transmittable" as mentioned herein is meant having transparency to laser beams used for optical disks to which the foregoing protective film is applied. In general, use is made of a film which transmits visible light in the region of 380 to 780 nm wavelength. As the light transmittable substrate film, there are usable films composed of transparent resins such as acrylic base resins, polyolefin based resins, polycarbonate based resins and norbornene based resins. Yet a resin having a thermal expansion coefficient close to that of the optical disk to which the protective

film is applied is preferable from the viewpoint of capability of preventing warp and the like. Thus there is usually used the resin same as the material for the substrate. Since a polycarbonate based resin is generally used as a resinous substrate for optical disks at the present time, a polycarbonate based resin film is generally used also in the present light transmittable substrate film.

Preferably, the light transmittable substrate film has surfaces as flat as possible, and is less liable to cause birefringence. The substrate, when causes birefringence, unfavorably worsen light condensing factor for the laser beam condensed. Also preferably, unevenness in thickness is as little as possible. The unevenness in thickness becomes responsible for lowering the light condensing factor for the laser beam. Moreover, for the purpose of preventing film surfaces from being injured even when a film surface comes into contact with an optical head of a drive, it is possible as desired to install a scratch prevention layer on the surface of the substrate film which is opposite to the pressure sensitive adhesive layer. The thickness of the light transmittable substrate film is properly optionally selected in response to the wavelength of laser beams to be used for optical disks to which the protective film according to the present invention is applied, and is in the range of generally 50 to 100 μm, preferably 50 to 90 μm.

In the protective film for optical disks according to the present invention, it is necessary that the difference in refractive index between the light transmittable substrate film and the pressure sensitive adhesive layer is at most 0.08. When the difference in refractive index is at most 0.08, reflection of the laser beam is less liable to generate on the interface between the pressure sensitive adhesive layer and the substrate film at the time when laser beam is incident and reflects from the recording surface, thereby suppressing the lowering of signal intensity or evil influence exerted upon the signal level as a noise. The above - mentioned difference in refractive index therebetween is preferably at most 0.07, more preferably at most 0.065.

In this connection the approximate refractive indices of polycarbonate film and polymethyl methacrylate film are 1.58 and 1.49, respectively.

The difference in refractive index between the light transmittable substrate film and the pressure sensitive adhesive layer is determined by measuring the refractive indices thereof by the use of Abbe refractometer (manufactured by Atago Co., Ltd. under the trade name Abbe refractometer 1T), and finding the difference therebetween.

In the protective film for optical disks according to the present invention, it is necessary that the gel fraction of the pressure sensitive adhesive layer is at least 65% by mass. When the gel fraction thereof is at least 65% by mass, it is made possible to minimize non-crosslinked components and at the same time, suppress the corrosion of metallic reflection film and the information recording layer in optical disks owing to the bleeding of the non-crosslinked components. The gel fraction thereof is preferably at least 70% by mass, more preferably at least 75% by mass, while the upper limit thereof is not defined but is usually about 90% by mass.

The above-mentioned gel fraction is measured by the following method.

<Gel fraction of pressure sensitive adhesive layer>

A pressure sensitive adhesive constituting the pressure sensitive adhesive layer is applied with a knife coater to a releasing treatment surface of a heavy releasable film (manufactured by LINTEC Corporation under the trade name "SP - PET381031"), and then the film is heated at 90 °C for about one minute to crosslink the same so as to produce the pressure sensitive adhesive layer having a thickness of about 25 μ m. The layer thus produced is laminated with a light releasable film (manufactured by LINTEC Corporation under the trade name "SP - PET38GS") to obtain a sheet sample for measuring gel fraction. The resultant sheet sample is allowed to stand under the conditions of 23°C and a relative humidity of 50% for one week, thereafter the pressure sensitive adhesive layer is peeled off, and extracted with ethyl acetate by refluxing for about 16 hours by the use of a Soxhlet extractor. The insoluble portion is air dried, thereafter dried at 100 °C for 10 hours, allowed to stand under the conditions of 23°C and a relative of 50% for 3 hours for humidity conditioning. Subsequently by measuring the mass of the sample, the gel fraction thereof is calculated from the following formula;

$$\text{Gel fraction (\%)} = (\text{mass of insoluble portion after drying and humidity conditioning} / \text{mass of pressure sensitive adhesive before extraction}) \times 100$$

The gel fraction can be regulated by the degree of crosslinking of the resinous components, for instance, at the time of producing a (meth)acrylic ester copolymer.

In addition, it is preferable that the above - mentioned pressure sensitive adhesive layer has a storage modulus at 25°C of at least $10^4$ Pa. When the storage modulus thereof at 25°C is at least $10^4$ Pa, the hold properties of the protective film stuck onto an optical disk is improved. The upper limit of the storage modulus thereof is not defined, but

is about $10^6$ Pa. Preferable storage modulus at 25°C ranges from $10^4$ Pa to $10^5$ Pa. The above - mentioned storage modulus is measured by the following method.

< Storage modulus at 25°C of pressure sensitive adhesive layer >

A measurement was made of storage modulus of a pressure sensitive adhesive layer at 25°C which is formed so as to have a thickness of about 600 μm by the use of a viscoelasticity measuring instrument (manufactured by Rheometrics Co., Ltd. under the trade name DYNAMIC ANALYZER RDA II) at 1 Hz.

In the protective film for optical disks according to the present invention, there is preferably used an acrylic pressure sensitive adhesive composed of as a resinous component, a (meth)acrylic ester copolymer which is suitable for optical application as a pressure sensitive adhesive constituting a pressure sensitive adhesive layer.

As the (meth)acrylic ester copolymer, there are preferably exemplified copolymers having (A) a constitutional unit which originates from a (meth)acrylic ester containing an aryloxyalkyl group and / or an arylalkyl group and which has a function of enhancing refractive index, (B) a constitutional unit which originates from a (meth)acrylic ester, which has a function of regulating glass transition temperature and in which an alkyl group in ester moiety bears 1 to 20 carbon atoms, (C) a constitutional unit which originates from a monomer equipped with a functional group bearing active hydrogen and which has a function of imparting crosslinking points and (D) a copolymer which is introduced as desired and which contains a constitutional unit originating from a monomer other than the foregoing.

In the (meth)acrylic acid ester copolymer, a monomer (a) forming the above - mentioned (A) a constitutional unit originating from a (meth)acrylic acid ester containing an aryloxyalkyl group and / or an arylalkyl group is exemplified by at least one species selected from the (meth)acrylic acid ester represented by the general formula (I)

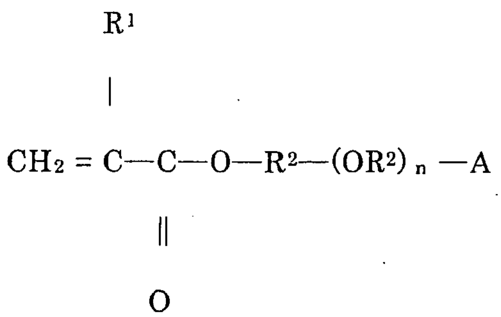

(I)

wherein $R^1$ is a hydrogen atom or a methyl group; A is an aryl group or an aryloxy group which has 6 to 20 all carbon atoms and which may have a substituent; $R^2$ is an alkylene group which has 1 to 4 carbon atoms and which may have a hydroxyl group; and n is an integer of 0, 1 or grater than 1.

As the above mentioned aryl group or an aryloxy group indicated by A which has 6 to 20 all carbon atoms and which may have a substituent, mention may be made of a phenyl group, 1-naphthyl group, 2-naphthyl group, phenoxy group, 1- naphthyloxy group and 2-naphthyloxy group each being allowed to bear, for instance, at least one hydrocarbon group having 1 to 10 carbon atoms on the ring. The alkylene group indicated by $R^2$ which has 1 to 4 carbon atoms and which may have a hydroxyl group may be either linear or branched, and is specifically exemplified by methylene group, ethylene group, propylene group, trimethylene group, 2-hydroxytrimethylene group and tetramethylene group. Preferably, n is about 0 to 10.

As the above-mentioned (meth)acrylic acid ester represented general formula (I), mention is made of 2-phenoxyethyl (meth)acrylate, 2-(2-phenoxyethoxy)ethyl (meth)acrylate, 2-hydroxy-3-phenoxypropyl (meth)acrylate, 2-(4-isopropylphenoxy)ethyl (meth)acrylate, 2-(1-naphthyloxy)ethyl (meth)acrylate, 2-(2-naphthyloxy)ethyl (meth)acrylate, benzyl (meth)acrylate, phenethyl (meth)acrylate, 3-phenylpropyl (meth)acrylate, 1-naphthylmethyl (meth)acrylate, 2-naphthylmethyl(meth)acrylate, para-cumylphenoxy (meth)acrylate ethylene glycol and the like. Any of the (meth)acrylic acid esters may be used alone or in combination with at least one other species, and 2-phenoxyethyl (meth)acrylate is particularly preferable for its capability of enhancing the refractive index without considerably raising the glass transition temperature (Tg) of the (meth)acrylic acid ester copolymer to be produced.

The monomer (b) which forms the constitutional unit (B), originates from a (meth)acrylic acid ester, has a function of regulating the glass transition temperature and in which an alkyl group in ester moiety bears 1 to 20 carbon atoms, is exemplified by methyl (meth)acrylate, ethyl (meth)acrylate, propyl (meth)acrylate, n-butyl(meth)acrylate, iso-butyl (meth)acrylate, pentyl (meth)acrylate, hexyl(meth)acrylate, cyclohexyl (meth)acrylate, 2-ethylhexyl (meth)acrylate, isooctyl(meth)acrylate, decyl (meth)acrylate, dodecyl (meth)acrylate, myristyl(meth)acrylate, palmityl (meth)acrylate,

stearyl (meth)acrylate and the like. Any of the (meth)acrylate just mentioned may be used alone or in combination with at least one other species.

Of these, are particularly preferable n- butylacrylate and / or 2-ethylhexylacrylate that are capable of providing a moderate Tg as a pressure sensitive adhesive.

The monomer (c) which forms the constitutional unit (C), originates from a monomer having a functional group bearing active hydrogen and which has a function of imparting crosslinking points, is exemplified by hydroxyalkyl (meth) acrylic ester such as 2-hydoxyethyl (meth)acrylate, 2-hydoxypropyl (meth)acrylate, 3-hydoxypropyl (meth)acrylate, 2-hydoxybutyl (meth)acrylate, 3-hydoxybutyl(meth)acrylate and 4-hydoxybutyl (meth)acrylate; acrylamides such as acrylamide, methacrylamide, N - methylacrylamide, N - methylmethacrylamide, N - methylol acrylamide and N-methylol methacrylamide; monoalkylaminoalkyl(meth)acrylate such as monomethylaminoethyl (meth)acrylate, monoethylaminoethyl (meth)acrylate, monomethylaminopropyl (meth)acrylate and monoethylaminopropyl (meth)acrylate ; and ethylenically unsaturated carboxylic acid such a acrylc acid, methacrylic acid, crotonic acid, maleic acid, itaconic acid and citraconic acid. Any of the monomers just mentioned may be used alone or in combination with at least one other species

The monomer (d) which forms the constitutional unit (D), originates from an other monomer, and is introduced as desired is exemplified by vinyl esters such as vinyl acetate and vinyl propionate; olefins such as ethylene, propylene and isobutylene; halogenated olefins such as vinyl chloride and vinylidene chloride; styrenic monomer such as styrene and $\alpha$-methylstyrene; diene based monomer such as butadiene, isoprene and chloroprene; nitrile based monomer such as acrylonitrile and methacrylonitrile and N, N-dialkyl substituted acrylamide such as N,N-dimethylacrylamide and N, N-dimethyl methacrylamide. Any of the monomers just mentioned may be used alone or in combination with at least one other species.

In the acrylic pressure sensitive adhesive, the content of each of the constitutional units in the (meth)acrylic acid ester copolymer to be used as a resinous component is properly optionally selected in accordance with refractive index in the pressure sensitive adhesive layer to be formed, gel fraction, Tg of the pressure sensitive adhesive each as desired. Usually, the content of (A) unit is 0 to 99.9% by mass, that of (B) unit is 0 to 99.9% by mass, that of (C) unit is 0.1 to 20% by mass, and that of (D) unit is 0 to 5% by mass. Preferably, the content of (A) unit is 40 to 90% by mass, that of (B) unit is 10 to 60% by mass, that of (C) unit is 0.1 to 5% by mass, and that of (D) unit is 0 to 5% by mass.

In the above - mentioned acrylic pressure sensitive adhesive, the polymerization system of the (meth)acrylic acid ester based copolymer to be used as a resinous component is not specifically limited, but may be any of random, block and graft copolymers. Preferably, the molecular weight of the copolymer is in the range of 500,000 to 2,000, 000 in terms of weight average molecular weight from the standpoint of preventing adverse influence upon optical disks and assuring reliability in the same. The foregoing weight average molecular weight is measured by gel permeation chromatography (GPC) expressed in terms of polystyrene.

In addition, the content of low molecular weight copolymer in the non - crosslinked components in the (meth) acrylic acid ester based copolymer is preferably minimized from the viewpoint of inhibiting corrosion of metallic reflection films, information recording layers and the like. More specifically, the proportion of components having a molecular weight of 10,000 or less in the non - crosslinked components is preferably at most 30% by mass, particularly preferably at most 25% by mass based on the non - crosslinked components. By the term "non - crosslinked components in the (meth)acrylic acid ester based copolymer" is meant components that are extracted with ethyl acetate in the above - described gel fraction measurement.

The glass transition temperature (Tg) of the (meth)acrylic acid ester copolymer is usually -60 to -10°C, preferably -50 to -20°C.

In the present invention, the (meth)acrylic acid ester copolymer may be used alone or in combination with at least one other species.

The production (by polymerization) of the (meth)acrylic acid ester copolymer in the present invention can be effected by a conventional method. Solvents to be used are exemplified by ethyl acetate, toluene and the like. Polymerization initiator to be used are exemplified by azobis(isobutyronitrile), benzoyl peroxide and the like. The polymerization, which is not specifically limited on the conditions, is carried out usually under the conditions of 50 to 90 °C for 2 to 30 hours.

The acrylic pressure sensitive adhesive to be used in the present invention may contain a crosslinking agent. It is not specifically limited, but may be optionally selected for use from among those which have heretofore been customarily employed in acrylic pressure sensitive adhesives, for instance, polyisocyanate compounds, epoxy resins, melamine resins, urea resins, dialdehydes, methylol polymers, metal chelate compounds, metal alkoxide and metal salts, in response to the types of the reflection films and information recording layers each for optical disks to which the protective films according to the present invention are applied. The content of the crosslinking agent is not specifically limited, but is usually 0.01 to 20 parts by mass based on 100 parts by mass of the (meth)acrylic acid ester copolymer.

It is preferable in the present invention to employ an acrylic pressure sensitive adhesive containing an antioxidant in the range of 0.005 to 10% by mass from the aspect of suppressing corrosion of metallic reflection films and the like. The content thereof of at least 0.005 % by mass sufficiently exhibits the effect on suppressing the corrosion of the metallic reflection films, information recording layers and the like. The content thereof exceeding 10% by mass is not so effective

in enhancing the effect considering the increased content, thereby causing economical disadvantage as the case may be. The content thereof is in the range of more preferably 0.01 to 5% by mass, particularly preferably 0.1 to 3% by mass.

The above-mentioned antioxidant is not specifically limited, but may be properly optionally selected for use from among those that are previously well known such as hindered phenol based antioxidant, amine based antioxidant, sulfur based antioxidant, phosphorus based antioxidant and quinone based antioxidant. Of these, the hindered phenol based antioxidant is preferably used. Specifically, as monocyclic phenol based antioxidant, mention is preferably made of 2, 6-di-tert-butyl-p-cresol, butylhydroxyanisole, stearyl β-(3,5-di-tert-butyl-4-hydroxyphenyl)propionate and the like; as dicyclic hindered phenol based antioxidant, mention is preferably made of 4,4'-butylidenebis(3-methyl-6-tert-butylphenol), 3,6-dioxaoctamethylenebis[3-(3-tert-butyl-4-hydroxy-5-methylphenyl)propionate and the like; as tricyclic phenol based antioxidant, mention is preferably made of 1,1,3-tris(2-methyl-4-hydroxy-5-tert-butylphenyl)butane and the like; and as tetracyclic phenol based antioxidant, mention is preferably made of tetrakis[methylene - 3-(3',5'-di-tert-butyl-4'-hydroxyphenyl)propionate] methane and the like. Any of above-cited antioxidants may be used alone or in combination with at least one other species.

Preferably, the acrylic pressure sensitive adhesive has a total content of residual solvents and residual monomers of at most 100 ppm by mass from the viewpoint of suppressing the erosion of a substrate film for the protective film for optical disks according to the present invention and of the substrate for optical disks; and also suppressing the corrosion of metallic reflection films and information recording layers each for optical disks. When the total content of residual solvents and residual monomers is at most 100 ppm by mass, erosion of the substrate film for the protective film and the substrate for optical disks is sufficiently suppressed. The total content of residual solvents and residual monomers is more preferably at most 50 ppm by mass, particularly preferably at most 20 ppm by mass.

In the protective film for optical disks according to the present invention, the above-mentioned acrylic pressure sensitive adhesive may be directly applied onto one side of the light transmittable substrate film so that the pressure sensitive adhesive layer is formed thereon. Alternatively, the acrylic pressure sensitive adhesive may be applied onto a releasing sheet to form the pressure sensitive adhesive layer, and thereafter superimpose the resultant layer on one side of the substrate film so that the layer is transferred therefrom. In this case, when desired, the releasing sheet may be attached as such without peeling off, and be peeled of at the time of using the protective film. The thickness of the pressure sensitive adhesive layer to be formed on one side of the substrate film is in the range of usually about 5 to 60 $\mu$m, preferably about 10 to 30 $\mu$ m. As the above - stated releasing sheet, mention is made of, for instance, paper substrate such as glassine paper, coated paper and cast coated paper; laminated paper in which the paper substrate cited above is laminated with a thermoplastic resin such as polyethylene, plastic film such as polyester film composed of polyethylene terephthalate, polybutylene terephthalate or polyethylene naphthalate and polyolefin film composed of polyethylene or polypropylene, which were coated with a releasing agent such as silicone resin. The thickness of the releasing sheet is not specifically limited, but is usually 20 to 150 $\mu$m approximately.

In the case of applying the acrylic pressure sensitive adhesive onto one side of the light transmittable substrate film or on the releasing sheet, a solvent such as ethyl acetate or toluene is usually added thereto, and thereafter the coating is dried to form the pressure sensitive adhesive layer preferably by heating the coating at 70°C or more, preferably 80 to 150°C for 10 seconds to 10 minutes.

Preferably, the protective film for optical disks according to the present invention is imparted with a light transmittance at a wavelength of 405 nm of at least 87%, since it is applied to optical disks, particularly Blu-ray Discs. The light transmittance at a wavelength of 405 nm, when being at least 87%, leads to favorable transmission of laser beam which is incident on an information recording layer of Blu-ray Discs and favorable transmission of reflection light from a recoding surface. The foregoing light transmittance is preferably at least 89%, more preferably at least 90%.

The optical disk according to the present invention is that wherein the protective film for an optical disk is stuck on the information recording layer formed on at least one side of a substrate for an optical disk via the pressure sensitive adhesive layer.

The substrate in the optical disk according to the present invention is not specifically limited provided that it is usable in ordinary optical disk, and polycarbonate resin substrate is generally used. The thickness of the substrate is properly optionally selected in response to the standards of the total thickness of the optical disk, thickness of the protective film to be formed on the information recording layer and the like, and is usually in the range of 1.05 to 1.15 mm. The constitution of a functional layer to be formed on the substrate needs only to be the constitution of an ordinary optical disk without specific limitation. For instance, in the case of ROM (read only memory), a metallic reflection film needs only to be formed as an information recording layer by means of sputtering method or the like. In the case of enabling writing in and readout, there is cited a layer constitution in which an information recording layer composed of a dielectric layer, a recording material layer and a dielectric layer is formed on a reflection film by the use of a phase variation type and optomagnetic type recording material. As the reflection film, there is used, for instance, a silver alloy film, aluminum film, an aluminum alloy film or the like. As the recording material in the information recording layer, there are used as phase variation type, TeOx, Te-Ge, Sn-Te-Ge, Bi-Te-Ge, Sb-Te-Ge, Pb-Sn-Te, and the like; as optomagnetic type, Tb-Fe, Tb-Fe-Co, Dy-Fe-Co, Tb-Dy-Fe-Co, and the like. As the dielectric layer in the information recording layer,

there are used, for instance, SiN, SiO, $SiO_2$, ZnS-SiOz, $Ta_2O_5$ and the like. Blue laser beam, which is usable in the optical disk according to the present invention, is preferably used particularly for high capacity Blu-ray Discs series such as BD-ROM, BD-R, BD-RAM and the like.

The working effects, advantages and industrial applicability of the present invention will be summarized as follows. The protective film for optical disks according to the present invention is used for the purpose of protecting the information recording layer for optical disks, particularly Blu-ray Discs, and is characterized in that it never exerts adverse influence on the recording characteristics of optical disks and besides, is capable of suppressing the corrosion of the metallic reflection film and information recording layer for optical disks. The present invention can further afford a highly reliable optical disk without bringing about any hindrance to the information recording and reproducing function for the optical disk.

## EXAMPLES

In what follows, the present invention will be described in more detail with reference to comparative examples and working examples, which however shall never limit the present invention thereto.

Various characteristics in each of the comparative examples and working examples were evaluated in accordance with the following procedure.

(1) Refractive index of pressure sensitive adhesive layer

By using an Abbe refractometer (manufactured by Atago Co., Ltd., under the trade name "Abbe refractometer 1T") in the protective film for optical disks, a measurement was made of the refractive index of the pressure sensitive adhesive layer through the irradiation of sodium D beam (wavelength of 589.3 nm) in an atmosphere of 25°C.

(2) Gel fraction of pressure sensitive adhesive layer

A measurement thereof was made in accordance with the description in the text of this specification.

(3) Light transmittance at a wavelength of 405 nm for the protective film for optical disks

A measurement was made of the light transmittance at a wavelength of 405 nm of the protective film for optical disks thus formed by the use of a ultraviolet visible spectrophotometer (manufactured by Shimadzu Corporation, under the trade UV-3100PC)

(4) Variation rate of reflectivity in the protective film for optical disks

A sample for measuring reflectivity was prepared by sticking the protective film for optical disks thus formed on a silver alloy film via the pressure sensitive adhesive layer thus formed. Then, measurements were made of initial reflectivity Ra of the sample as it is for rays at a wavelength of 4.05 nm, and reflectivity Rb of the sample which had been allowed to stand for 1000 hours in an atmosphere of 85% in relative humidity for rays at a wavelength of 405 nm by the method described hereunder.

Measurement were made of the reflectivity at a wavelength of 405 nm of the protective film for optical disks thus formed by irradiating rays at a wavelength of 405 nm from the side of the light transmittable film by means of a ultraviolet visible spectrophotometer (manufactured by Shimadzu Corporation, under the trade UV - 3100PC).

Subsequently variation rate of reflectivity (Y) was determined from the following relationship.

$$Y\ (\%) = [(Ra - Rb) / Ra] \times 100$$

(5) Proportion of (meth)acrylic acid ester copolymer having a weight average molecular weight of 10,000 or lower in non-crosslinked components

Measurements were made of the weight average molecular weight and molecular weight distribution of the (meth)acrylic acid ester copolymer (non - crosslinked components) which had been extracted with ethyl acetate in the measurement of gel fraction by GPC method, and the proportion thereof was calculated from the ratio of peak area in the chart obtained. GPC measurement was carried out, using a GPC apparatus (manufactured by Tosoh Corporation under the trade name "HLC - 8020) and connecting column TSKGelGMHXL - TSKGelGMHXL - TSKGel G2000HHLXL

(all manufactured by Tosoh Corporation) in three series.

Example 1

To a monomer mixture consisting of 40 parts by mass of n-butyl acrylate, 57 parts by mass of 2-phenoxyethyl acrylate and 3 parts by mass of acrylic acid were added 150 parts by mass of ethyl acetate as a solvent and 0.1 part by mass of azobis(isobutyronitrile) as a polymerization initiator to proceed with polymerization at 60°C for 17 hours in an atmosphere of nitrogen, so that a solution of copolymer was obtained which had a weight average molecular weight of 540,000 and a glass transition temperature of -25°C and which was composed of n-butyl acrylate / 2-phenoxyethyl acrylate /acrylic acid. Subsequently, 3.0 parts by mass of polyisocyanate based crosslinkng agent (manufactured by Toyo Ink Mfg Co., Ltd. under the trade name BHS-8515) was added thereto based on 100 pars by mass of the solid component of the copolymer solution to prepare a coating solution of pressure sensitive adhesive.

The coating solution thus obtained was applied with a knife coater onto the releasing treatment surface of a releasing film (manufactured by LINTEC Corporation under the trade name "SP -PET381031") so that the thickness of the coating after drying was made to be 20 μm. The resultant coating was dried at 90°C for about one minute, and thereafter was laminated with a polycarbonate film having a thickness of 80 μm as a light transmittable substrate film to prepare a protective film having a thickness of about 100 μ m for optical disks. Various characteristics of the protective film thus obtained are given in Table 1.

Example 2

The procedure in Example 1 was repeated to prepare a solution of copolymer which had a weight average molecular weight of 500,000 and a glass transition temperature of -22°C and then prepare a coating solution of pressure sensitive adhesive, except that use was made as a monomer mixture, of a mixture of 20 parts by mass of n-butyl acrylate, 77 parts by mass of 2-phenoxyethyl acrylate and 3 parts by mass of acrylic acid. Subsequently, by the use of the resultant coating solution of pressure sensitive adhesive, a protective film having a thickness of about 100 μ m for optical disks was prepared. Various characteristics of the protective film thus obtained are given in Table 1.

Comparative Example 1

The procedure in Example 1 was repeated to prepare a coating solution of pressure sensitive adhesive, and a protective film having a thickness of about 100 μm for optical disks, except that the polyisocyanate based crosslinkng agent was added in an amount of 0.5 part by mass instead of 3 parts by mass. Various characteristics of the protective film thus obtained are given in Table 1.

Comparative Example 2

The procedure in Example 1 was repeated to prepare a solution of copolymer which had a weight average molecular weight of 650,000 and a glass transition temperature -41°C and thereafter to prepare a coating solution of pressure sensitive adhesive, except that 2-phenoxyethyl acrylate was not used and n-butyl acrylate was used in an amount of 97 parts by mass.

Subsequently, by the use of the resultant coating solution of the pressure sensitive adhesive, a protective film having a thickness of about 100 μ m for optical disks was obtained in the same manner as in Example 1. Various characteristics of the protective film thus obtained are given in Table 1.

Table 1

| | | Example 1 | Example 2 | Comparative Example 1 | Comparative Example 2 |
|---|---|---|---|---|---|
| Pressure Sensitive Adhesive layer | Gel fraction (mass %) | 82.6 | 77.4 | 45.0 | 74.9 |
| | Proportion of (meth)acrylic acid ester copolymer (M.W. ≦ 10,000) in non- crosslinked component | 22 | 24 | 28 | 20 |
| | Refractive index | 1.521 | 1.540 | 1.520 | 1.468 |
| | Difference in Refractive index (⊿n) | 0.062 | 0.043 | 0.063 | 0.115 |
| Protective film | Light transmittance for ray at 405 nm wavelength (%) | 90.7 | 90.1 | 88.5 | 89.9 |
| | Variation rate in reflectivity (%) | 2.4 | 1.7 | 4.5 | 1.9 |

Refractive index of the substrate film (polycarbonate film) is 1.583.

## Claims

1. A protective film for optical disks which comprises a light transmittable substrate film and a pressure sensitive adhesive layer formed on one side thereof, wherein the difference in refractive index between the light transmittable substrate film and the pressure sensitive adhesive layer is at most 0.08 and a gel fraction of the pressure sensitive adhesive layer is at least 65% by mass.

2. The protective film for optical disks as set forth in Claim 1, wherein the pressure sensitive adhesive which constitutes the pressure sensitive adhesive layer is composed of a (meth)acrylic acid ester copolymer as a resinous component.

3. The protective film for optical disks as set forth in Claim 2, wherein the (meth)acrylic acid ester copolymer has a constitutional unit originating from (meth)acrylic acid ester bearing aryloxyalkyl groups and / or arylalkyl groups.

4. The protective film for optical disks as set forth in Claim 2 or 3, wherein the (meth)acrylic acid ester copolymer has a weight average molecular weight in the range of 500,000 to 2,000, 000.

5. The protective film for optical disks as set forth in any of the preceding Claims 2 to 4, wherein the proportion of the component having a molecular weight of at most 10,000 in non - crosslinkd components in (meth)acrylic acid ester copolymer is at most 30% by mass.

6. The protective film for optical disks as set forth in any of the preceding Claims 1 to 5, wherein the light transmittable substrate film is a polycarbonate based resin film.

7. The protective film for optical disks as set forth in any of the preceding Claims 1 to 6, which has a light transmittance at a wavelength of 405 nm of at least 87%.

8. An optical disk comprising the protective film for optical disks which is set forth in any of the preceding Claims 1 to 7, and which is stuck onto an information recording layer formed on at least one side of a substrate for the optical disk via a pressure sensitive adhesive layer.

**Patentansprüche**

1. Schutzfilm für optische Disks, welcher einen lichtdurchlässigen Substratfilm und eine druckempfindliche Adhäsivschicht auf einer Seite davon aufweist, wobei die Differenz des Brechungsindex von lichtdurchlässigem Substratfilm und druckempfindlicher Adhäsivschicht höchstens 0,08 beträgt und die Gelfraktion der druckempfindlichen Adhäsivschicht mindestens 65 Gew.-% beträgt.

2. Schutzfilm für optische Disks wie in Anspruch 1 beansprucht, wobei der druckempfindliche Klebstoff, der die druckempfindliche Klebstoffschicht bildet, aus einem (Meth)acrylsäureester-Copolymer als Harzkomponente aufgebaut ist.

3. Schutzfilm für optische Disks wie in Anspruch 2 angegeben, wobei das (Meth)acrylsäureester-Copolymer eine Aufbaueinheit aufweist, die von (Meth)acrylester stammt, der Aryloxyalkylgruppen und/oder Arylalkylgruppen trägt.

4. Schutzfilm für optische Disks wie in Anspruch 2 oder 3 angegeben, wobei das (Meth)acrylsäureester-Copolymer ein gewichtsmittleres Molekulargewicht im Bereich von 500.000 bis 2.000.000 aufweist.

5. Schutzfilm für optische Disks wie in einem der vorhergehenden Ansprüche 2 bis 4 angegeben, wobei der Anteil der Komponente mit einem Molekulargewicht von höchstens 10.000 in nicht-vernetzten Komponenten im (Meth)acrylsäureester-Copolymer höchstens 30 Gew.-% beträgt.

6. Schutzfilm für optische Disks wie in einem der vorstehenden Ansprüche 1 bis 5 angegeben, wobei der lichtdurchlässige Substratfilm ein Harzfilm auf Polycarbonatbasis ist.

7. Schutzfilm für optische Disks wie in einem der vorhergehenden Ansprüche 1 bis 6 angegeben, welcher eine Lichtdurchlässigkeit von mindestens 87 % bei einer Wellenlänge von 405 nm aufweist.

8. Optische Disk, umfassend den Schutzfilm für optische Disks, der in einem der vorhergehenden Ansprüche 1 bis 7 angegeben ist, und welcher auf einer Informationsaufzeichnungsschicht mit Hilfe einer druckempfindlichen Adhäsivschicht befestigt ist, die auf mindestens einer Seite eines Substrats für die optische Disk ausgebildet ist.

**Revendications**

1. Film de protection pour disques optiques comprenant un film de substrat transmissible à la lumière et une couche adhésive sensible à la pression formée sur une cote de celui-ci, dans lequel la différence de l'index réfractif entre le film de substrat transmissible à la lumière et la couche adhésive sensible à la pression est au plus 0,08 et une fraction de gel de la couche adhésive sensible à la pression est au moins 65 % massique.

2. Film de protection pour disques optiques selon la revendication 1, dans lequel l'adhésif sensible à la pression qui constitue la couche adhésive sensible à la pression est composé, en tant qu'une composante résineuse, de copolymère d'ester méthacrylique.

3. Film de protection pour disques optiques selon la revendication 2, dans lequel le copolymère d'ester méthacrylique a un motif constitutionnel provenant de groupes aryloxyalkyle portant d'ester (meth)acrylique et/ou de groupes arylalkyle.

4. Film de protection pour disques optiques selon la revendication 2 ou 3, dans lequel le copolymère d'ester méthacrylique a un poids moléculaire moyen de poids dans la gamme de 500.000 à 2.000.000.

5. Film de protection pour disques optiques selon l'une quelconque des revendications précédentes 2 à 4, dans lequel la proportion du constituant ayant un poids moléculaire d'au plus 10.000 dans des constituants non réticulés dans le copolymère d'ester (meth)acrylique est au plus 30 % massique.

6. Disque optique comprenant le film de protection pour disques optiques selon l'une quelconque des revendications précédentes 2 à 5, dans lequel le film de substrat transmissible à la lumière est un film de résine à base de polycarbonate.

7. Film de protection pour disques optiques selon l'une quelconque des revendications précédentes 1 à 6 qui a une transmission de la lumière à une longueur d'onde de 405 nm d'au moins 87 %.

8. Film de protection pour disques optiques selon l'une quelconque des revendications précédentes 1 à 7 qui est collé à une couche d'enregistrement d'informations formée sur au moins une cote d'un substrat pour le disque optique par une couche adhésive sensible à la pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000067468 A
- EP 1047055 A